# EUROPEAN PATENT APPLICATION

(11) **EP 3 269 777 A1**
(43) Date of publication of application: **17.01.2018**
(21) Application number: 17178982.9
(22) Date of filing: 30.06.2017
(51) Int. Cl.: C08L 95/00, C08L 29/14, C08L 23/12, D06N 5/00, C08L 23/00, C08L 23/08, C08L 29/04, C08L 55/02

(54) **A HOMOGENEOUS WATERPROOFING MEMBRANE COMPOSITION**

(30) Priority: 30.06.2016 BE 201605510; 30.06.2016 EP 16177046
(71) Applicant: Imperbel, 1651 Lot (BE)
(72) Inventor: AERTS, Hans, 1731 ZELLIK (BE); VERDEBOUT, Renaud, 5030 GEMBLOUX (BE); MARTIN, Caroline, 1651 LOT (BE)
(74) Representative: Gevers Patents

(57) **Abstract**

A homogeneous waterproofing membrane composition containing active membrane compounds comprising plasticized polyvinyl butyral (PVB), polymer modified bitumen, where the polymer forms a polymeric matrix, wherein bitumen and plasticized PVB are retained.

## Description

The present invention relates to a waterproofing membrane composition containing active membrane compounds comprising plasticized polyvinyl butyral (PVB) and polymer modified bitumen.

US 4,277,533 discloses a waterproofing sheet material useful as a free floating membrane or flashing material in roofing applications.

The waterproofing sheet material can be composed of coal tar pitch in an amount comprised between 15-20 weight % up to about 80 % weight and plasticized PVB in a quantity comprised between 80-85 weight % or about 20 %.

This document discloses that fatty acids such as linseed oil, soya oil, oleic acid and stearic acid may be included in the composition to improve low temperature characteristics and to assist in processing a hot melt admixture of the compounds into a sheet.

There is plasticized PVB in sheet form contained in intermediate layers which form safety glass in the automotive industry. This type of plasticized PVB is used to form the aforementioned waterproofing sheet material.

The manufacturing of plasticized PVB includes the use of virgin PVB which is then mixed with a plasticizer which can be triethylene glycol di-2-ethylbutyrate, diethylene glycol di-2-ethylbutyrate, dibutyl sebacate, and esters of di-or triethylene glycol with caprilic, lauric or other long chain acids.

This document also teaches the possibility of using unplasticized PVB but it will involve the plasticizing of this virgin PVB in order to manufacture the waterproofing sheet material. However, this option will be expensive. The use of recycled plasticized PVB is highly preferred.

In this document, plasticized or plasticized-free PVB is mixed with coal tar pitch. However, coal tar pitch is less attractive than bitumen in terms of physical and chemical properties, such as weathering properties, supporting temperature changes, brittleness, etc.

WO 2009 086 087 relates to a bituminous mixture which comprises thermoplastic polymer membranes applicable in road paving and roofing industries.

This document teaches that plasticized or plasticized-free PVB cannot be homogeneously mixed with molten bitumen, since it forms heterogeneous mixtures.

In this document, the bituminous mixture comprises from 2 to 8 weight % of bitumen, from 27 to 98 weight % of mineral aggregates, inorganic fillers and mineral aggregates with a particle size of less than 4 mm. The mineral aggregates are completely coated with thermoplastic polymer composition. The latter can be selected from the group consisting of polyolefins, polyamides, polyesters, polyvinyl acetates, styrene-based block copolymers, PVC and PVB.

PVB can be a virgin PVB which has not be used in any industry or a recovered or recycled PVB coming from the automotive industry.

As explained above, PVB, when used in laminated glass, comprises one or several plasticizers in order to provide a balance of mechanical properties.

A recycled or recovered PVB may comprise between 70-99,5 weight % of PVB, between 0,5-20 weight % of glass and between 0-10 weight % of other inorganic and/or organic components, each weight % being expressed in relation to the total weight of the PVB composition.

In this document, PVB is thereby not directly mixed with molten bitumen but only used for coating aggregates, which can then be mixed with a relatively small amount of bitumen in the final composition.

US 5,360,848 discloses modified bitumen in the presence of solubilizing agent and plasticized PVB to form a homogeneous bituminous mixtures. The solubilizing agent is essential in this mixture since plasticized PVB cannot be homogeneously mixed with molten bitumen.

In this document, bitumen is modified by the solubilizing agent.

There is therefore a need to provide less expensive waterproofing membrane composition, where it is possible to upcycle plasticized PVB in a bituminous composition.

It is an object of the invention to provide a waterproofing membrane composition, where recycled PVB can be mixed with bitumen in order to upcycle plasticized PVB in several field of technology, in particular in waterproofing membrane for roof covering. In this way, a less expensive waterproofing membrane composition with enhanced physical and mechanical properties can be provided.

To solve this problem, the invention provides a homogeneous waterproofing membrane composition containing active membrane compounds comprising:
- Plasticized polyvinyl butyral (PVB), and
- Polymer modified bitumen,
where the polymer forms a polymeric matrix, wherein bitumen and the plasticized PVB are retained.

In the present invention, it has been surprisingly found that that the use of plasticized PVB with bitumen and a polymer configured to modify the bitumen is advantageous since less polymer is needed to reach the phase inversion. A less expensive composition can therefore be provided. In fact, the plasticized PVB has such chemical affinity with the polymer modified bitumen that it does not adversely affect the phase inversion. The latter is useful since it enables creating a polymeric matrix where the plasticized PVB and bitumen are retained. In this way, bitumen and plasticized PVB are both present in this polymeric matrix, without necessarily adding any additional plasticizer or compatibilizing agent in the composition.

Typically, polymer modified bitumen is obtained by mixing bitumen, having preferably a sol structure, with a polymer. The addition of the polymer to the bitumen leads to a phase inversion, corresponding to the moment at which the amount of polymer is sufficient to form a polymeric matrix, where bitumen can be retained. When the inversion phase occurs, the bitumen having the behaviour of a Newtonian liquid will have the properties of a viscoelastic fluid. In this way, polymer modified bitumen can be used in several fields of technology, such as in waterproofing products, in particular in roof covering.

The polymer of the present invention has particular chemical interactions with bitumen and the plasticized PVB. The polymer forms a continuous phase (polymeric matrix). When the phase inversion occurs, the bitumen and the plasticized PVB are retained into the polymeric matrix giving the adequate viscoelastic properties and the stability to the composition.

In the present invention, it has been discovered that mixing plasticized PVB, bitumen and a polymer leads to the formation of the polymeric matrix, where bitumen and the plasticized PVB are retained. It was not expected that the plasticized PVB would not adversely affect the phase inversion between the polymer and bitumen. The phase inversion phenomenon depends on the ratios of the polymer of the present invention and the bitumen in the composition.

The composition of the present invention can be used for manufacturing a waterproofing membrane having an appropriate flexibility which is an advantageous criterion, for example when the waterproofing membrane is applied on a roof.

Furthermore, the composition of the present invention needs fewer amounts of polymer to reach the phase inversion, which is economically advantageous. And, it has advantageous tensile properties in comparison with known compositions.

The term 'homogeneous' refers to a composition which is microscopically homogeneous. This means that the plasticized PVB and the bitumen are both retained in the polymeric matrix formed by the polymer, when the phase inversion occurs.

It has been surprisingly observed that the present composition has advantageous properties (viscosity, ductility, flexibility, etc.), without using any additional plasticizer or compatibilizing agent.

The composition of the present invention is therefore less expensive. The use of plasticized PVB is increased in an efficient way without adversely affecting the phase inversion.

In a preferred embodiment of the invention, bitumen is coming from the distillation of crude oil. Bitumen from crude oil origin is preferably used in the composition of the invention.

Preferably, the waterproofing membrane composition of the present invention is substantially free of any additional plasticizer or compatibilizing agent.

In a preferred embodiment of the composition of the present invention, the plasticized PVB is a production plasticized PVB, preferably coming from the automotive industry or the building/construction industry.

Preferably, said production plasticized PVB comprises between 65 and 95 % in weight, preferably between 70 and 80 % in weight, more preferably equal to 75 % in weight of a virgin PVB, and between 5 and 35 % in weight, preferably between 20-35 % in weight, more preferably equal to 30 % in weight or equal to about 25 % in weight of a plasticizer, each weight percent is expressed in relation to the total weight of the production plasticized PVB.

Advantageously, the composition of the present invention comprises between 0,5 and 20 % in weight of plasticized PVB, preferably between 0,5 and 17 % in weight, more preferably between 3 and 14 % in weight, most preferably between 5 to 14 % in weight with respect to the total weight of the composition.

In a more preferably embodiment, bitumen is present in an amount comprised between 40 and 80 weight %, with respect to the total weight of the composition.

Advantageously, the polymer is present in an amount comprised between 0,1 and 30 weight %, with respect to the total weight of the composition.

Particularly, the polymer of the present invention is chosen from the group consisting of Styrene-Butadiene-Styrene (SBS), Styrene-Ethylene-Butene-Styrene (SEBS), Styrene-Ethylene-Propylene-Styrene (SEPS), Dimethyl-Gamma-Butyrolactone Acrylate (DBA), Styrene-Isoprene-Styrene (SIS), Polyisobutylene (PIB), Polyhydroxybutyrate, Atactic Polypropylene (APP), Isotactic Polypropylene (IPP), Syndiotactic Polypropylene (SPP), Ethylene-Vinyl-Acetate (EVA) and combinations thereof.

Preferably, the composition comprises a filler chosen from the group consisting of calcium carbonate and preferably colemanite or aluminate trihydrate (ATH).

More preferably, the filler is present in an amount comprised between 10-40 % in weight, preferably between 10-30 % in weight, more preferably between 10-25 % in weight with respect to the total weight of the composition.

Other embodiments of the composition of the present invention are mentioned in the annexed claims.

The present invention also relates to a process for manufacturing the homogeneous waterproofing membrane composition according to the invention comprising the steps of:
- Mixing a plasticized PVB with bitumen to form a blend at a predetermined temperature, and
- Adding a polymer to the blend until reaching a phase inversion in order to provide a polymer modified bitumen,
where the polymer forms a polymeric matrix, wherein bitumen and the plasticized PVB are retained.

It has been surprisingly observed that the plasticized PVB will be retained in the polymeric matrix with the bitumen. This enables saving costs, since less polymer is needed to reach the phase inversion, which was not expected in the prior art.

Preferably, the predetermined temperature is of at least 180 °C, more preferably at least 190 °C, even more preferably at least 195 °C.

Advantageously, the process of the invention does not need any addition of a plasticizer or compatibilizing agent.

Advantageously, the plasticized PVB is mixed with bitumen first and then the polymer can be added to form polymer modified bitumen.

More advantageously, the process comprises a step of impregnating the homogeneous composition on at least one side of at least one reinforcement layer.

In a particularly preferred embodiment, the process comprises a step of adding a filler to the homogeneous composition, which filler is chosen from the group consisting of calcium carbonate and preferably colemanite or aluminate trihydrate (ATH).

Preferably, the filler is added after the polymer into the composition.

In a more preferably embodiment, bitumen is present in an amount comprised between 40 and 80 weight %, with respect to the total weight of the composition.

Advantageously, the polymer is present in an amount comprised between 0,1 and 30 weight %, with respect to the total weight of the composition.

Other embodiments of the process for manufacturing the composition of the present invention are mentioned in the annexed claims.

The present invention also concerns a roof waterproofing membrane provided with at least one reinforcement layer impregnated with the composition of the present invention.

Preferably, the present invention may relate to a roof waterproofing membrane comprising a reinforcement layer having a first face and a second face. At least one of the first and second faces is impregnated with the composition of the present invention.

Preferably, the roof comprises between 0,5 and 20 % in weight of plasticized PVB, preferably between 0,5 and 17 % in weight, more preferably between 3 and 14 % in weight, most preferably between 5 to 14 % in weight with respect to the total weight of the composition.

More preferably, the roof comprises the composition of the present invention, wherein the plasticized PVB is a production plasticized PVB, preferably coming from the automotive industry or the building industry.

In a particular embodiment of the present invention, the roof comprises between 65 and 95 % in weight, preferably between 70 and 80 % in weight, more preferably equal to 75 % in weight of a virgin PVB, and between 5 and 35 % in weight, preferably between 20-35 % in weight, more preferably equal to 30 % in weight, or equal to about 25 % in weight of a plasticizer, each weight percent is expressed in relation to the total weight of the production plasticized PVB.

More advantageously, the polymer to modify the bitumen is chosen from the group consisting of Styrene-Butadiene-Styrene (SBS), Styrene-Ethylene-Butene-Styrene (SEBS), Styrene-Ethylene-Propylene-Styrene (SEPS), Dimethyl-Gamma-Butyrolactone Acrylate (DBA), Styrene-Isoprene-Styrene (SIS), Polyisobutylene (PIB), Polyhydroxybutyrate, Atactic Polypropylene (APP), Isotactic Polypropylene (IPP), Syndiotactic Polypropylene (SPP), Ethylene-Vinyl-Acetate (EVA) and combinations thereof.

Other embodiments of the roof waterproofing membrane of the present invention are mentioned in the annexed claims or in the following description.

The present invention also relates to a process for manufacturing a waterproofing membrane for roof covering, comprising the steps of:
- Providing a reinforcement layer having a first face and a second face,
- Impregnating the composition, according to the present invention, on at least the first face of the reinforcement layer to provide the waterproofing membrane for roof covering.

Other embodiments of the process for manufacturing the waterproofing membrane for roof covering are mentioned in the annexed claims or in the following description.

The process for manufacturing a waterproofing membrane is preferably limited to the manufacturing of a roof covering waterproofing membrane which comprises a reinforcement layer having a first face and a second face wherein at least one of the first and second faces is impregnated with the composition of the present invention.

More preferably, both first and second faces of the reinforcement layer are impregnated with the composition of the present invention.

All the features mentioned above for the roof waterproofing membrane can be used to limit the process for manufacturing the waterproofing membrane for roof covering.

Other embodiments of the process for manufacturing a waterproofing membrane for roof covering are mentioned in the annexed claims.

The invention further concerns a use of the composition of the present invention for waterproofing applications, preferably for the manufacturing of a roofing membrane or tile, floor tile or membrane or bitumen emulsion.

Other embodiments of the use of the present invention are mentioned in the annexed claims.

Other characteristics and advantages of the invention will appear more clearly in the light of the following description of a particular non-limiting embodiment of the invention.

In the meaning of the present invention, it has to be understood by the terms 'production plasticized PVB' a compound having between 60-80 weight %, preferably between 60-75 weight %, more preferably equal to about 75 weight % of PVB and between 20-40 weight %, preferably between 20-35 weight %, more preferably equal to about 30 weight % or equal to about 25 % in weight of a plasticizer.

This type of product can be used directly as interlayer in glass sheet since he does have the adequate properties to be used, for instance in automotive industry or in building/construction industry.

Preferably, the production plasticized PVB comprises as plasticizer: tri(ethylene glycol) bis(2-ethylhexanoate).

Such production plasticized PVB can be provided, for example, by the firm Socaplast, Hainauplast or Kuraray.

For the purpose of the present invention, the expression 'substantially free of any additional plasticizer or compatibilizing agent' means that the additional plasticizer or compatibilizing agent content, relative to the total weight of the composition, is lower than 1 weight %, in particular lower than 0,5 weight %, more preferably lower than 0,05 weight %, even more preferably lower than 0,005 weight %, most preferably equal to about 0,0005 weight %.

In the meaning of the present invention, it has to be understood by the wording 'plasticizer or compatibilizing agent' a compounds acting on the composition, more specifically on the polymer modified bitumen in order to facilitate the dispersion of the plasticized PVB, in particular production plasticized PVB, into the polymer modified bitumen.

For example, fatty acids such as linseed oil, soya oil, oleic acid, stearic acid and mixtures thereof may be considered as being a plasticizer or compatibilizing agent.

In the context of the present invention, the terms 'comprises', 'comprising', 'includes', 'including', 'containing', 'characterized by', 'has', 'having' or any other synonym or variation thereof refer to a non-exclusive inclusion. For example, a composition, process, use or article, that is described as comprising a particular list of elements is not necessarily limited to those particularly listed elements but may further include other elements not expressly listed or inherent to such a composition, process, use or article.

The transitional phrase "consisting of excludes any element, step, or ingredient not specified in the claim, closing the claim to the inclusion of materials other than those recited except for impurities ordinarily associated therewith.

Where an invention or a portion thereof is described with an open-ended term such as 'comprising', it is to be understood that, unless otherwise stated in specific circumstances, this description also includes a description of the invention using the terms 'consisting of as it is defined above.

All fillers for use in bitumen-based binder compounds can be used in the binder compound according to the present invention. Examples of fillers are talcum, CaCO₃, sand, silica, rock meal, fly ash, limestone meal, calcium hydrate, organic filler such as meal, flour, sawdust. The filler ensures amongst others that the binder compound is less sticky.

In a specific embodiment of the present invention, the homogeneous waterproofing membrane composition consists in plasticized polyvinyl butyral (PVB) and polymer modified bitumen, wherein said composition is substantially free of any additional plasticizer or compatibilizing agent.

More preferably, the homogeneous waterproofing membrane composition consists in plasticized polyvinyl butyral (PVB) and polymer modified bitumen, wherein the PVB and the polymer modified bitumen are active membrane compounds.

For the purpose of the present invention, the terms 'active membrane compounds' refer to compound acting chemically or physically on the composition or confers advantageous mechanical or physical properties to the composition.

The performances of the composition of the present invention can be estimated through several parameters such as ring & ball softening point, needle penetration, viscosity and flexibility.

The ring & ball softening point is defined at the temperature at which the bitumen attains a specific consistency. According to the present invention, the ring & ball softening point has been measured at two temperatures. The first ring & ball softening point corresponds to the temperature at which the ball starts to pass through the ring and the second ring & ball softening point is measured according the NF EN 1427 or ASTM D36 standard.

The needle penetration at 60 °C consists in measuring the hardness of bitumen under specified conditions. The indentation of bitumen in tenths of a millimetre (dmm) at 60 °C is measured by using a standard needle with a loading of 100 g during 5 second. The needle penetration at 60 °C is realised according to the ASTM D5 standard.

The viscosity allows estimating if bitumen can be used in different fields of technology such as in waterproofing products. The viscosity of bitumen used in the present invention is preferably comprised between 1500 - 30000 cps at 180 °C, preferably 5000 - 15000 cps at 180°C, measured according to ASTM D2171 standard.

The flexibility of the composition of the present invention is measured at the temperature at which the product obtained cracks.

The tensile properties of the composition of the invention are estimated by the force ductility method according to the Standard EN 13589.

In the context of the present invention, bitumen 150 or 70/100 can be used. For example, bitumen 150 refers to bitumen having a penetrability of 150 at 25°C, as determined in Standard EN 1426.

Plasticized PVB is advantageously provided into pellets.

### Example 1

A homogeneous waterproofing membrane composition is prepared according to a first embodiment of the composition of the present invention by mixing 6,7 weight % of a production plasticized PVB into pellets (coming from building/construction industry), which comprises about 75 weight % of PVB and about 25 weight % of tri(ethylene glycol) bis(2-ethylhexanoate), as plasticizer, with 55,8 weight % of bitumen (bitumen 150). Then, 17,9 weight % of APP polymers is added to that blend in order to reach the phase inversion. 19,6 weight % of calcium carbonate is further added to the blend.

Each weight percent is expressed in relation to the total weight of the composition.

The composition of this first embodiment is obtained by mixing the aforementioned components at 190 °C.

The performances of the composition of this specific example can be estimated through several parameters such as ring & ball softening point, needle penetration at 60 °C, viscosity at 180 °C and flexibility.

Table 1 below indicates the results of these parameters for the composition of the first embodiment.

**Table 1**

| **Properties** | **Results** |
|---|---|
| Ring & ball softening point | 122-151 °C |
| Needle penetration at 60°C | 116 dmm |
| Viscosity at 180 °C | 17000 cps |
| Flexibility | -22 °C |

Such a composition can be used to provide a roof covering waterproofing membrane. The roof covering waterproofing membrane having a reinforcement layer with first and second faces can be manufactured by impregnating the composition of this first embodiment on the first and second faces of the reinforcement layer. The membrane is then dried to provide the final product ready to be applied on the roof of a building.

### Example 2

According to a second embodiment of the invention, a blend containing 8,3 weight % of a production plasticized PVB (coming from building/construction industry), which comprises about 75 weight % of PVB and about 25 weight % of tri(ethylene glycol) bis(2-ethylhexanoate), as plasticizer, and 69,4 weight % of bitumen is prepared. Then, it has been observed that only 22,3 weight % of APP is needed to reach the phase inversion.

The composition of this first embodiment is obtained by mixing the aforementioned components at 200 °C.

Each weight percent is expressed in relation to the total weight of the composition.

The performances of the composition of this specific example can be estimated through several parameters such as ductility, as indicated below in table 2.

**Table 2**

| **Properties** | **Results** |
|---|---|
| Ductility (EN 13589) | 50% |

Such a composition can be used to provide a roof covering waterproofing membrane. The roof covering waterproofing membrane having a reinforcement layer with first and second faces can be manufactured by impregnating the composition of this first embodiment on the first and second faces of the reinforcement layer. The membrane is then dried to provide the final product ready to be applied on the roof of a building.

### COMPARATIVE EXAMPLE 1

A waterproofing membrane composition is prepared by mixing 69,4 weight % of bitumen with 30,6 weight % of APP polymers to form a polymer modified bitumen, where the polymer forms a polymeric matrix wherein bitumen is retained.

Each weight percent is expressed in relation to the total weight of the composition.

### COMPARATIVE EXAMPLE 2

A waterproofing membrane composition is prepared by mixing 55,8 weight % of bitumen with 24,6 weight % of APP polymers to form a polymer modified bitumen, where the polymer forms a polymeric matrix wherein bitumen is retained. Then, a filler, such as calcium carbonate can be added in an amount of 19,6 weight % in order to provide a composition which can be used to manufacture waterproofing products. Each weight percent is expressed in relation to the total weight of the composition.

## Claims

1. A homogeneous waterproofing membrane composition containing active membrane compounds comprising:
- Plasticized Polyvinyl butyral (PVB),
- Polymer modified bitumen,
where the polymer forms a polymeric matrix, wherein bitumen and the plasticized PVB are retained.

2. Waterproofing membrane composition according to claim 1, wherein the plasticized PVB is a production plasticized PVB, preferably coming from the automotive industry or the building/construction industry.

3. Waterproofing membrane composition according to claim 1 or 2, wherein said production plasticized PVB comprises between 65 and 95 % in weight, preferably between 70 and 80 % in weight, more preferably equal to 75 % in weight of a virgin PVB, and between 5 and 35 % in weight, preferably between 20-35 % in weight, more preferably equal to 25 % in weight of a plasticizer, each weight percent is expressed in relation to the total weight of the production plasticized PVB.

4. Waterproofing membrane composition according to any one of the preceding claims, comprising between 0,5 and 20 % in weight of plasticized PVB, preferably between 0,5 and 17 % in weight, more preferably between 3 and 14 % in weight, most preferably between 5 to 14 % in weight with respect to the total weight of the composition.

5. Waterproofing membrane composition according to any one of the preceding claims, wherein the polymer is chosen from the group consisting of Styrene-Butadiene-Styrene (SBS), Styrene-Ethylene-Butene-Styrene (SEBS), Styrene-Ethylene-Propylene-Styrene (SEPS), Dimethyl-Gamma-Butyrolactone Acrylate (DBA), Styrene-isoprene-Styrene (SIS), Polyisobutylene (PIB), Polyhydroxybutyrate, Atactic Polypropylene (APP), Isotactic Polypropylene (IPP), Syndiotactic Polypropylene (SPP), Ethylene-Vinyl-Acetate (EVA) and combinations thereof.

6. Waterproofing membrane composition according to any one of the preceding claims comprising a filler chosen from the group consisting of calcium carbonate, preferably colemanite or aluminate trihydrate (ATH).

7. Waterproofing membrane composition according to any one of the preceding claims, wherein the filler is present in an amount comprised between 10-40 % in weight, preferably between 10-30 % in weight, more preferably between 10-25 % in weight with respect to the total weight of the composition.

8. Waterproofing membrane composition according to any one of the preceding claims, wherein bitumen is present in an amount comprised between 40 and 80 weight %, with respect to the total weight of the composition.

9. Waterproofing membrane composition according to any one of the preceding claims, wherein the polymer is present in an amount comprised between 0,1 and 30 weight %, with respect to the total weight of the composition.

10. Process for manufacturing the homogeneous waterproofing membrane composition according to any one of the preceding claims, comprising the steps of:
- Mixing a plasticized PVB with bitumen to form a blend at a predetermined temperature, and
- Adding a polymer to the blend until reaching a phase inversion to provide a polymer modified bitumen, where the polymer forms a polymeric matrix, wherein the bitumen and the plasticized PVB are retained.

11. Process according to claim 10, comprising a step of adding a filler to the homogeneous composition, which filler is chosen from the group consisting of calcium carbonate, preferably colemanite or aluminate trihydrate (ATH).

12. Process according to claim 10 or 11, wherein bitumen is present in an amount comprised between 40 and 80 weight %, with respect to the total weight of the composition.

13. Process according to any one of the preceding claims, wherein the polymer is present in an amount comprised between 0,1 and 30 weight %, with respect to the total weight of the composition.

14. Roof waterproofing membrane provided with at least one reinforcement layer impregnated with a composition according to any one of claims 1 to 9.

15. Process for manufacturing a waterproofing membrane for roof covering, comprising the steps of:
- Providing a reinforcement layer having a first face and a second face,
- Impregnating the composition, according to any one of claims 1 to 9, on at least the first face of the reinforcement layer to provide the waterproofing membrane for roof covering.
